# EUROPEAN PATENT APPLICATION

(11) **EP 4 174 694 A1**
(43) Date of publication of application: **03.05.2023**
(21) Application number: 21306514.7
(22) Date of filing: 28.10.2021
(51) Int. Cl.: G06F 21/51, G06F 21/57

(54) **METHOD FOR SECURELY EXECUTING AN APPLICATION**

(71) Applicant: Thales Dis France SAS, 92190 Meudon (FR)
(72) Inventor: FOKLE KOKOU, Milas, 92190 Meudon (FR); HUYSMANS, Guillaume, 92190 Meudon (FR); TEGLIA, Yannick, 92190 Meudon (FR)
(74) Representative: Bricks, Amélie

(57) **Abstract**

The present invention relates to a method for securely executing an application on a second device, wherein a memory space of said application comprises an execution enclave configured to access a memory of the second device storing sealed data obtained by a sealing enclave by sealing on a first device a predetermined message with a first hardware key associated to said first device based on a value depending on an identity of said sealing enclave, and comprising, performed by said execution enclave to verify that the second device is authorized to execute the application,
- a) retrieving (E1) said sealed data in said memory,
- b) retrieving (E2) an enclave identity of said execution enclave,
- c) based on said retrieved enclave identity, obtaining a second hardware key associated to said second device and verifying that the second device is authorized to execute the application using said obtained second hardware key and said retrieved sealed data (E3),
- d) if verification is successful, continuing (E4) said application's execution on said second device.

## Description

### FIELD OF THE INVENTION

The present invention relates to virtualization and containerization solutions and more particularly to a method for securely executing an application on a device.

### BACKGROUND OF THE INVENTION

The ever-increasing bandwidth of high-speed networks and the progresses of virtualization and containerization solutions have made software execution less and less tied to hardware. It is now easy to launch the execution of a program on a virtual server in a cloud service without taking care of the hardware executing the program. Similarly, container systems and virtual machine solutions enable to easily deploy an application on multiple hardware systems and to seamlessly switch the execution of an instance of a Virtual Machine or container from one machine to another.

Moving so easily an application from a machine to another may be a problem when execution shall be limited to some specific machines, for security or legal reasons.

For example, it may be desirable to restrict execution to machines of a specific individual or company, in order to prevent an attacker from copying a virtual machine or container and (re)starting it later on its own computer in order to access secrets handheld by the application.

Similarly, when a program is executed on a cloud system, it may be desirable to prevent the execution of the program from being transferred to a machine with lower security features, known to be part of a group of compromised machines or shared with other users of the cloud system in order to prevent an attacker from spying on the program's execution if applications of different users are not isolated enough one from each other.

Such an application, in order to monitor the hardware machine on which it executes, could query the Operating System (OS) or hypervisor of the machine for information about its hardware and take appropriate actions if it discovers that the machine executing it is either not authorized or as changed since the initialization of the application. Nevertheless, such an approach can be defeated by a rogue OS or hypervisor, for example when execution occurs on the computer of an attacker.

Consequently, there is a need for a method enabling an application to check on which hardware machine it executes and if this machine has changed since the initialization of the application, without requiring the application to trust any lower level program (such as OS or hypervisor) to do so.

### SUMMARY OF THE INVENTION

For this purpose and according to a first aspect, this invention therefore relates to a method for securely executing an application on a second device, wherein a memory space of said application comprises an execution enclave configured to access a memory of the second device storing sealed data obtained by a sealing enclave by sealing on a first device a predetermined message with a first hardware key associated to said first device based on a value depending on an identity of said sealing enclave,
and comprising, performed by said execution enclave to verify that the second device is authorized to execute the application,
- a) retrieving said sealed data in said memory,
- b) retrieving an enclave identity of said execution enclave,
- c) based on said retrieved enclave identity, obtaining a second hardware key associated to said second device and verifying that the second device is authorized to execute the application using said obtained second hardware key and said retrieved sealed data,
- d) if verification is successful, continuing said application's execution on said second device.

It enables to check the identity of the second device against the identity of the first device, while preventing other software such as the OS or a hypervisor from interfering with the verification process. It also enable to check that the same enclave has sealed the data and performs the verification of the sealed data.

In an embodiment, said first hardware key and second hardware key are derived respectively from a first device hardware master key and said value depending on an identity of said sealing enclave, and from a second device hardware master key and said value depending on an identity of said execution enclave.

It enables the enclave to get keys that depend both on the hardware and on the identity of enclave. Using such keys, the verification can be successful only if the first and second device are related and if the sealing and execution enclave are a single enclave

In a first embodiment, said sealed data is generated by said sealing enclave by encrypting said predetermined message and said value depending on an identity of said sealing enclave using said first hardware key.

It enables to generate sealed data which can only be deciphered using an appropriate second hardware key. And then, decrypted data enable to check the identity of the execution enclave versus the identity of the sealing enclave.

In a second embodiment, said sealed data is generated by said sealing enclave by generating a signature from said predetermined message and said value depending on an identity of said sealing enclave using said first hardware key.

It enables to generate a signature which can only be verified using an appropriate second hardware key. And then, decrypted data enable to check the identity of the execution enclave versus the identity of the sealing enclave.

Said value depending on an identity of said sealing enclave may comprise a hash of data comprising an enclave code of said sealing enclave.

In an embodiment, said first hardware key and second hardware keys are sealing keys (SEAL_KEY) of respectively the first device and the second device according to SGX technology and they are obtained respectively by the sealing enclave and the execution enclave using the EGETKEY function of SGX technology.

Using SGX technology enables to get from the hardware of each device a key which is unique to this device and unknown from outside the device

An enclave identity may be a value of an enclave specific field MRENCLAVE according to SGX technology.

Such a value uniquely identifies the enclave and can be efficiently used to make the sealed data depend on the identity of the enclave.

In an other embodiment, said first hardware key and second hardware key are obtained from an output of a physically unclonable function of respectively the first device and the second device, triggered by respectively the sealing enclave and the execution enclave.

Using a PUF function enables to get outputs specific to the device hardware and it cannot be copied to another device.

Said verification that the second device is authorized to execute the application may comprise :
- unsealing said retrieved sealed data using said obtained second hardware key to obtain unsealed data,
- comparing said unsealed data with said predetermined message.

Such a comparison enables to verify that the second hardware key can be successfully used to unseal the sealed data, which proves the relationship between the first device and the second device.

Said steps a) to d) performed by the execution enclave may be performed at initialization of the application or in the course of its execution.

The verification that the second device is authorized to execute the application may be a verification that the second device is identical to the first device.

Such a verification enables the application to verify that the device executing it has not changed since the generation of the sealed data.

Said first device and second device belonging to a group of trusted devices, the first hardware key may be a group signature key for said group of trusted devices, said signature generated by the sealing enclave may be a group signature proving that the first device belongs to said group of trusted devices and the verification that the second device is authorized to execute the application may be a verification that the second device is among said group of trusted devices by verifying said signature using said second hardware key as a group signature key.

It enables the application to check if the second device executing the application is part of a group of trusted devices including the first device which executed the sealing enclave. It enables to define such a group of trusted devices among which the execution of an application can be transferred while ensuring that the application executes only on a trusted device.

The method according to the first aspect may comprise by said execution enclave, when the verification that the second device is authorized to execute the application fails, taking a dedicated warning action or interrupting execution of said application.

It enables to take actions such preventing the execution of the application when it discovers it is being executed on an untrusted device.

In an embodiment, said application is a virtual machine under the control of a hypervisor and the execution of said steps a) to d) by the execution enclave is triggered by the virtual machine when said virtual machine is resumed after prior shutdown or hibernation.

It enables the virtual machine to check after resuming on which device it executes and it enables the virtual machine itself to prevent its execution when it has been transferred to an untrusted device during its hibernation.

According to a second aspect, this invention relates to a computer program product directly loadable into the memory of at least one computer, comprising software code instructions for performing the steps of the method according to the first aspect of the invention when said product is run on the computer.

According to a third aspect, this invention relates to a second device comprising a processor, a memory configured to store sealed data obtained by a sealing enclave by sealing on a first device a predetermined message and a value depending on an identity of said sealing enclave with a first hardware key associated to said first device and an input-output interface,
said processor and said input-output interface being configured to perform the steps of the method according to the first aspect of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of the execution of an application according to a first embodiment of the present invention;
- Figure 2 is a schematic illustration of the execution of an application according to a second embodiment of the present invention;
- Figure 3 is a schematic illustration of a device according to an embodiment of the present invention;
- Figure 4 is a schematic illustration of the steps performed performed by the sealing enclave, called by the application executed on the first device according to an embodiment of the present invention;
- Figure 5 is a schematic illustration of the steps performed by the execution enclave, called by the application when executed on the second device, when it wishes to verify that the second device is authorized to execute the application according to an embodiment of the present invention.

### DETAILED DESCRIPTION OF EMBODIMENTS OF THE INVENTION

The invention relates to a method for securely executing an application on a device by enabling this application to check on which hardware machine it executes and if this machine has changed since the initialization of the application.

In order to do so, a first idea of the invention is to make the application, at some point of its execution on a first device, generate sealed data obtained by sealing a predetermined message and store it on the first device. Then, when, later on, the application wishes to check the hardware on which it executes, called here below second device, the application can access a memory of the second device storing sealed data and verify that the second device is authorized to execute the application by checking the authenticity of the sealed data stored in the second device memory.

The fact that the second device stores correct sealed data is not a sufficient proof that this device can be trusted. Therefore, a second idea of the invention is to make cryptographic keys used to generate and to verify the sealed data depend on the hardware machine on which the application executes. By doing so, the verification of the sealed data by the application on the second device will be successful, that is to say, the cryptographic key used to verify the sealed data, called second hardware key, will correspond to the cryptographic key used to seal the data in the first place, only if the second device is the same than the first device, or if they both belong to a trusted group of devices.

Finally, a third idea of the invention is to ensure that the application, when performing its verification of the sealed data, truly accesses the second hardware key provided by the second device hardware by having this verification performed by a side-application which is protected, isolated from other applications, and other software even with higher privileges (e.g. Operating System, Hypervisor) and has a direct access to hardware. In the rest of the description, such a side-application will be called by the term "enclave" as used in SGX technology for describing such a side-application. Nevertheless, as will be apparent below, the invention is not limited to the use of SGX technology for performing sealing and verification operations. Using such an enclave can prevent attacks based on a compromised application or OS providing a rogue key to the process performing the verification in order to hide the key truly provided by the second device hardware.

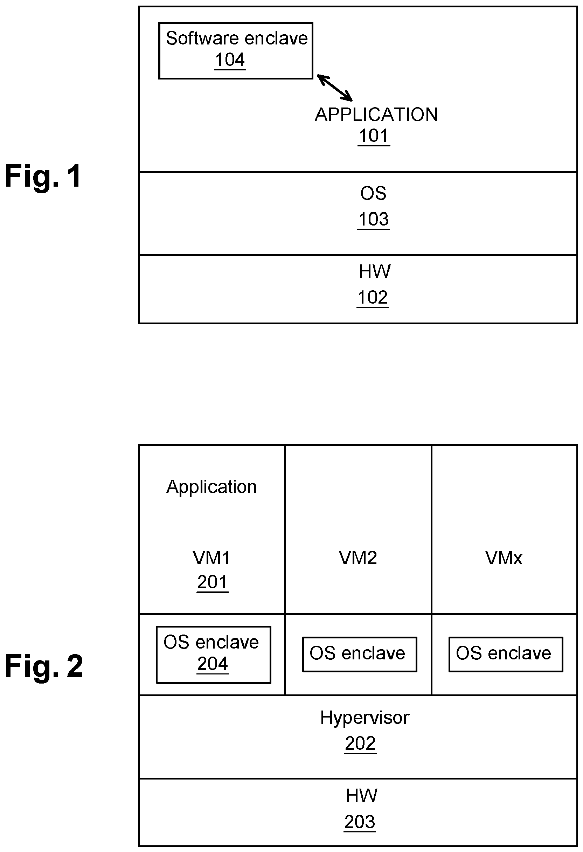

In a first embodiment, shown on **Figure 1**, the application 101 is a standard application, executed by the first or second device hardware 102 under the control of the OS 103 executing on the machine. As described here after, the sealing and sealed data verification operations are performed by a software enclave 104 called by the application whenever needed.

In a second embodiment, shown on **Figure 2**, the application is a virtual machine 201 under the control of a hypervisor 202 executing on the first or second device hardware 203. The hypervisor may be of Type 1, having direct access to the hardware 203, as shown on Figure 2. Alternatively, it may be of Type 2 and execute on top of a host OS. In both cases, the virtual machine 201 includes a guest operating system and the sealing and sealed data verification operations may be performed by an enclave executing OS code, called OS enclave 204, of the guest OS, called by the application whenever needed.

In a third embodiment, the application is a container executed by the first or second device hardware under the control of a container engine executed on top of the OS executing on the machine. As described here after, in this embodiment, the sealing and sealed data verification operations are performed by a software enclave called by the application whenever needed.

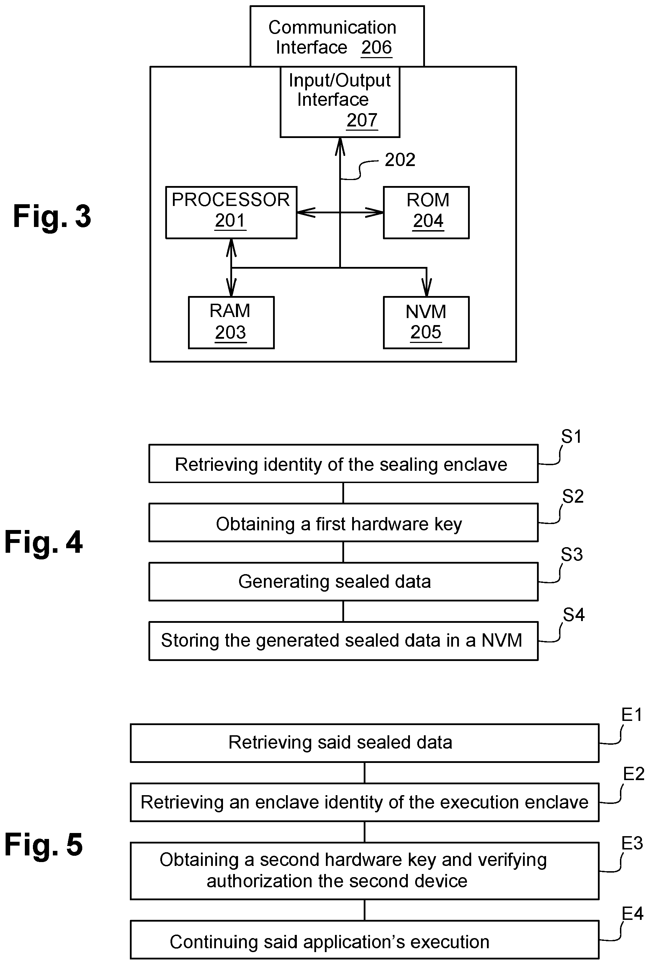

**Figure 3** is a schematic illustration of the first device and the second device. It may include a processor 201 connected via a bus 202 to a random access memory (RAM) 203, a read-only memory (ROM) 204, and/or a non-volatile memory (NVM) 205. It may further include a communication interface 206 used to connect the device to various forms of wireless networks, e.g., wide-area networks, WiFi networks, or mobile telephony networks. Alternatively, such devices may connect to networks via wired network connections such as Ethernet. The devices may also include an input/output interface 207 providing interfaces to their users such as one or more screens, loudspeakers, a mouse, tactile surfaces, a keyboard etc...

The first and second devices may for example be personal computers or computer servers. They may be part of a cloud infrastructure performing remote computations for a cloud service.

The following paragraphs describe, as illustrated on **Figure 4**, the steps performed by an enclave, hereafter called sealing enclave, called by the application executed on the first device, in order to leave a trace depending on the identity of the first device and enabling a subsequent verification of the device executing the application.

In a first sealing step S1, the sealing enclave retrieves its identity. Such an identity may for example be an enclave code uniquely identifying the sealing enclave.

In a second sealing step S2, the sealing enclave obtains a first hardware key associated to the first device.

In a first embodiment, the providing of cryptographic keys associated to a device hardware relies on SGX technology. In such a case, the first hardware key may be a sealing key SEAL_KEY of the first device according to SGX technology and the sealing enclave may obtain it using the EGETKEY function of SGX technology. In such a case, the enclave identity retrieved in the first sealing step may be the enclave specific field MRENCLAVE according to SGX technology.

In a second embodiment, the first device may comprise a physically unclonable function (PUF), and the sealing enclave may obtain the first hardware key from an output of the PUF. For example, the sealing enclave may trigger the PUF using a predefined input challenge and it may derive the first hardware key from the response of the PUF to this challenge.

In both embodiments, the first hardware key may be derived from a first device hardware master key and from a value depending on the retrieved identity of the sealing enclave. For example, the first device may store a root sealing key and the field MRENCLAVE may be used as an argument to the EGETKEY function in order to derive the first hardware key from the root sealing key and the field MRENCLAVE. In case of using a PUF, the first hardware key may be derived from the output of the PUF and from a value depending on the retrieved identity of the sealing enclave.

In a third sealing step S3, the sealing enclave generates sealed data by sealing a predetermined message with the obtained first hardware key based on a value depending on the identity of the sealing enclave. When the first hardware key has been derived from the identity of the sealing enclave, the result of such a sealing naturally depend on the identity of the sealing enclave. When the first hardware key does not depend on the identity of the sealing enclave, the sealing enclave may generate the sealed data by sealing a value depending on both the predetermined message and the identity of the sealing enclave.

In a first embodiment, the sealing enclave may for example seal by performing an encryption. It may encrypt, with the first hardware key, the predetermined message only, when the first hardware key has been derived from the sealing enclave identity, or a concatenation of the predetermined message and the value depending on the retrieved enclave identity. Such an encryption may for example be performed using AES (Advanced Encryption Standard), ECIES (Elliptic Curve Integrated Encryption Scheme) and RSA.

In a second embodiment, the sealing enclave may seal by generating a signature. It may sign, with the first hardware key, the predetermined message only, when the first hardware key has been derived from the sealing enclave identity, or the predetermined message and the value depending on the retrieved enclave identity.

In both embodiments, the value depending on the retrieved enclave identity may be a hash of data comprising the enclave code or the enclave specific field MRENCLAVE of the sealing enclave.

In a fourth sealing step S4, the sealing enclave may store the generated sealed data in a non-volatile memory of the first device in order to enable a subsequent verification of the hardware executing the application, using the sealed data.

These sealing steps may be performed at the initialization of the application, in the course of its execution or at termination of execution of the application. For example, when the application is a container or a virtual machine, these steps may be performed when the application is shut down or when it goes to hibernation.

The following paragraphs describe, as illustrated on **Figure 5**, the steps performed by an enclave, hereafter called execution enclave, called by the application when executed on the second device, when it wishes to verify that the second device is authorized to execute the application.

In a first execution step E1, the execution enclave retrieved sealed data in a memory of the second device. These sealed data have been produced by a sealing enclave as described above in sealing steps S1 to S4.

In a second execution step E2, the execution enclave retrieves an enclave identity of itself. As described above about the sealing enclave identity, such an identity may for example be an enclave code uniquely identifying the execution enclave, or an enclave specific field MRENCLAVE according to SGX technology.

In a third execution step E3, the execution enclave, based on the retrieved enclave identity, obtains a second hardware key associated to the second device and verifies that the second device is authorized to execute the application using the obtained second hardware key and the retrieved sealed data.

As described above for the first hardware key, the second hardware key may be a sealing key SEAL_KEY of the second device according to SGX technology and the execution enclave may obtain it using the EGETKEY function of SGX technology. Alternatively, the second device may comprise a physically unclonable function (PUF), and the execution enclave may obtain the second hardware key from an output of the PUF, as described above for the first hardware key. The second hardware key may be derived from a second device hardware master key and from a value depending on the retrieved identity of the execution enclave.

Such a verification may include an unsealing step during which the execution enclave unseals the retrieved sealed data using the second hardware key to obtain unsealed data. It may also include a comparison step during which the execution enclave compares the unsealed data with the predetermined message. When the sealed data has been generated by sealing both the predetermined message and a value depending on the identity of the sealing enclave, this step may also include a comparison of the unsealed data with the retrieved enclave identity of the execution enclave.

Alternatively, when the sealed data comprise a signature of the data, such a verification may consist in a verification of this signature using the predetermined message, and the retrieved enclave identity of the execution enclave if necessary.

In a first embodiment, the verification that the second device is authorized to execute the application is a verification that the second device is identical to the first device, that is to say a verification that the device currently executing the application is the very same than the device that generated the sealed data. In order to make sure of it, the execution enclaves may for example check that unsealed data are identical to the known predetermined message, and to its obtained enclave identity when the sealing enclave identity was included in the sealed data. The sealed data can be successfully unsealed, leading to successful verification, only when the second hardware key is identical to the first hardware key. Since hardware keys are tied to the hardware and cannot be tampered with by another application or the OS/hypervisor thanks to the enclave, this is a proof that the device executing the execution enclave is the same than the one that executed the sealing enclave. Such a verification also verifies that the enclave identity remained the same, either by its inclusion in the sealed data or by the dependency of the first and second hardware keys to the enclave identity, which ensures that the sealed data were generated by the same enclave and not by another enclave called by another application on the same hardware machine.

In a second embodiment, the verification that the second device is authorized to execute the application is a verification that the second device is among a group of trusted devices using a group signature. In order to do so, each device belonging to this group may store a group signature key depending on the hardware of the device and enabling the device either to generate as sealed data a signature proving its belonging to the group or to verify the group signature of the sealed data.

In such a case, the first hardware key is such a group signature key for the group of trusted devices, the signature generated by the sealing enclave is a group signature proving that the first device belongs to this group of trusted devices and the verification that the second device is authorized to execute the application is a verification that the second device is among said group of trusted devices by verifying the signature using the second hardware key as a group signature key. In such a case, the verification of the signature using the second hardware key is successful only when the second device truly belongs to the group of trusted devices. Otherwise, it won't own a group signature key for this group and the verification using a key which is not a group signature key for the group will fail. In the case of SGX technology, such a group signature mechanism may be based on the Root Provisioning Keys of the devices which are specific to each machine but are known by the CPU manufacturer, which enables to derive group signature keys based on it for a given group of devices.

These execution steps may be performed at the initialization of the application or in the course of its execution. For example, when the application is a container or a virtual machine, these steps may be performed when the application is resumed after a shut down or hibernation.

When the verification that the second device is authorized to execute the application is successful, the execution of the application is continued on the second device in a fourth execution step E4.

When the verification that the second device is authorized to execute the application fails, it means that the second device is neither the same as the first device nor another device of the group of trusted devices. In such a case, the execution enclave may take a dedicated warning action, such as sending a warning message to the application or sending a warning email to a user, signaling an external entity, destroying all its secrets or interrupting the execution of the application.

The security mechanism according to the invention may be bypassed by an attacker by preventing the application from calling the execution enclave which performs the verification that the second device is authorized to execute the application. In order to force the use of the enclave, the OS code executing on the second device either natively or in a virtual machine may be modified such that critical services or features of the OS, such as the Linux ELF loader, comprise at the beginning of their execution a call to the execution enclave triggering a verification that the second device is authorized. By doing so, such critical services won't execute unless the enclave is called and the second device is successfully recognized as the same than the first device or belonging to the same group of trusted devices.

According to a second aspect, the invention relates to a computer program product directly loadable into the memory of at least one computer, comprising software code instructions for performing, when said product is run on the computer, the steps of the method described here before.

According to a third aspect, the invention relates to a second device comprising a processor, a memory configured to store sealed data obtained by a sealing enclave by sealing on a first device a predetermined message and a value depending on an identity of said sealing enclave with a first hardware key associated to said first device and an input-output interface,
said processor and said input-output interface being configured to perform the steps of the method described here before.

## Claims

1. A method for securely executing an application (101) on a second device (102, 203),
wherein a memory space of said application comprises an execution enclave (104, 204) configured to access a memory (205) of the second device storing sealed data obtained by a sealing enclave by sealing on a first device a predetermined message with a first hardware key associated to said first device based on a value depending on an identity of said sealing enclave,
and comprising, performed by said execution enclave to verify that the second device is authorized to execute the application,
- a) retrieving (E1) said sealed data in said memory,
- b) retrieving (E2) an enclave identity of said execution enclave,
- c) based on said retrieved enclave identity, obtaining a second hardware key associated to said second device and verifying that the second device is authorized to execute the application using said obtained second hardware key and said retrieved sealed data (E3),
- d) if verification is successful, continuing (E4) said application's execution on said second device.

2. The method of claim 1, wherein said first hardware key and second hardware key are derived respectively from a first device hardware master key and said value depending on an identity of said sealing enclave, and from a second device hardware master key and said value depending on an identity of said execution enclave.

3. The method of claim 1 or 2, wherein said sealed data is generated by said sealing enclave by encrypting said predetermined message and said value depending on an identity of said sealing enclave using said first hardware key.

4. The method of claim 1 or 2, wherein said sealed data is generated by said sealing enclave by generating a signature from said predetermined message and said value depending on an identity of said sealing enclave using said first hardware key.

5. The method of any one of claims 1 to 4, wherein said value depending on an identity of said sealing enclave comprises a hash of data comprising an enclave code of said sealing enclave.

6. The method of any one of claims 1 to 5, wherein said first hardware key and second hardware keys are sealing keys (SEAL_KEY) of respectively the first device and the second device according to SGX technology and they are obtained respectively by the sealing enclave and the execution enclave using the EGETKEY function of SGX technology.

7. The method of the previous claim, wherein an enclave identity is a value of an enclave specific field MRENCLAVE according to SGX technology.

8. The method of any one of claims 1 to 5, wherein said first hardware key and second hardware key are obtained from an output of a physically unclonable function of respectively the first device and the second device, triggered by respectively the sealing enclave and the execution enclave.

9. The method of any one of claims 1 to 8, wherein said verification that the second device is authorized to execute the application comprises :
- unsealing said retrieved sealed data using said obtained second hardware key to obtain unsealed data,
- comparing said unsealed data with said predetermined message.

10. The method of any one of claims 1 to 9, wherein said steps a) to d) performed by the execution enclave are performed at initialization of the application or in the course of its execution.

11. The method of any one of claims 1 to 10, wherein the verification that the second device is authorized to execute the application is a verification that the second device is identical to the first device.

12. The method of claim 4, wherein said first device and second device belong to a group of trusted devices, the first hardware key is a group signature key for said group of trusted devices, said signature generated by the sealing enclave is a group signature proving that the first device belongs to said group of trusted devices and the verification that the second device is authorized to execute the application is a verification that the second device is among said group of trusted devices by verifying said signature using said second hardware key as a group signature key.

13. The method of any one of claims 1 to 12, comprising by said execution enclave, when the verification that the second device is authorized to execute the application fails, taking a dedicated warning action or interrupting execution of said application.

14. The method of any one of claims 1 to 13, wherein said application is a virtual machine under the control of a hypervisor and the execution of said steps a) to d) by the execution enclave is triggered by the virtual machine when said virtual machine is resumed after prior shutdown or hibernation.

15. A computer program product directly loadable into the memory of at least one computer, comprising software code instructions for performing the steps of any one of claims 1 to 14 when said product is run on the computer.

16. A second device (102, 203) comprising a processor (201), a memory (205) configured to store sealed data obtained by a sealing enclave by sealing on a first device a predetermined message and a value depending on an identity of said sealing enclave with a first hardware key associated to said first device and an input-output interface (207),
said processor and said input-output interface being configured to perform the steps of any one of claims 1 to 14.
